# EUROPÄISCHE PATENTSCHRIFT

(11) **EP 0 366 129 B1**
(45) Veröffentlichungstag und Bekanntmachung des Hinweises auf die Patenterteilung: **27.10.1993**
(21) Anmeldenummer: 89119870.7
(22) Anmeldetag: 26.10.1989
(51) Int. Cl.: B65D 1/20, B29C 49/20

(54) **Verfahren zur Herstellung eines Spundfasses mit Fassmantel, Fassboden und Fassdecke**
Method for the manufacture of a bung barrel with a side wall, bottom and cover
Procédé pour la fabrication d'un tonneau à bonde avec paroi latérale, fond inférieur et fond supérieur

(30) Priorität: 28.10.1988 DE 3836791; 26.08.1989 DE 3928324
(43) Veröffentlichungstag der Anmeldung: 02.05.1990
(73) Patentinhaber: SOTRALENTZ S.A., F-67320 Drulingen (FR)
(72) Erfinder: Pfeiffer, Pierre, F-67320 Drulingen (FR); Sigwalt, Paul, F-67320 Drulingen (FR); Cheval, Benoit, F-67700 Saverne (FR)
(74) Vertreter: Masch, Karl Gerhard, Dr.

(56) Entgegenhaltungen:
- EP-A- 0 041 874
- DE-U- 8 703 247
- DE-U- 8 705 916
- FR-A- 2 571 654
- GB-A- 1 542 852
- GB-A- 2 201 936
- US-A- 3 334 771
- US-A- 4 664 958
- US-A- 4 767 021

## Beschreibung

Die Erfindung betrifft ein Verfahren zur Herstellung eines Spundfasses im Wege der Blasformgebung, wobei Faßmantel, Faßboden und Faßdecke einstückig aus thermoplastischem Kunststoff geformt werden, wobei in der Faßdecke zumindest ein Spundloch mit Spundlochkragen angebracht wird und wobei im Bereich des Überganges zwischen Faßmantel und Faßdecke für Manipulationszwecke ein L-Ring angeordnet wird. L-Ring bedeutet, daß der Ring bei aufrechtstehendem Spundfaß einen umgekehrt L-förmigen Querschnitt aufweist, dessen L-Fuß nach außen weist. L-Schenkel und L-Fuß können rechtwinklig oder auch mit einem anderen Winkel aneinander angeschlossen sein. Der L-Ring kann bei der Blasformgebung angeformt oder vorgeformt und angeschweißt sein.

Spundfässer, die auf die beschriebene Weise hergestellt werden, werden als Gebinde für die verschiedensten Zwecke und für die Lagerung und den Transport der verschiedensten flüssigen Substanzen eingesetzt. Die Praxis verlangt in zunehmendem Maße Spundfässer, die möglichst vollständig mit geringer im Spundfaß verbleibender Restmenge entleert werden können. Zum Zwecke der Entleerung wird ein solches Spundfaß in eine Entleerungskippstellung mit schräger Faßachse gebracht oder mit vertikaler Faßachse gleichsam auf den Kopf gestellt. Die letztgenannte Stellung wird im Rahmen der Erfindung als Entleerungsinversionsstellung bezeichnet. Sie wird zumindest am Ende eines Entleerungsvorganges eingenommen. Im allgemeinen sind zwei Spundlöcher vorgesehen, eines für die Befüllung, eines für die Entleerung. Die Befüllung kann auch über beide Spundlöcher erfolgen. Die Entleerung erfolgt über ein definiertes Spundloch. Es versteht sich, daß die Entleerung so erfolgt, daß mit dem Auslaufen der Flüssigkeit Luft in das Spundfaß eindringen kann. Das Spundfaß kann dazu auch mit entsprechenden Einrichtungen ausgerüstet sein. Der Spundlochkragen ist außenseitig zumeist mit einem Gewinde zum Aufschrauben einer Verschlußkappe versehen.

Im Rahmen der bekannten Maßnahmen, von denen die Erfindung ausgeht (GB-A-2 201 936, DE-U-86 28 811), werden das Spundloch und der Spundlochkragen bei der Blasformgebung angeformt. Der Spundlochkragen kann als eine Ausstülpung ausgebildet sein, die bei der Blasformgebung geformt wird und deren oberes Kopfstück nach dem Entformen abgeschnitten wird, so daß sich aus der hutförmigen Ausstülpung der Spundlochkragen bildet. Sowohl bei der Entleerung eines Spundfasses über eine Enleerungskippstellung als auch bei der Entleerung eines Spundfasses über die Entleerungsinversionsstellung bleibt bei den durch die bekannten Verfahren hergestellten Spundfässern eine störend große Restmenge. Eine Vollentleerung durch bloßes Auslaufen, nach welcher in einem nach den bekannten Maßnahmen hergestellten Spundfaß eine störend große Menge der zu entleerenden Flüssigkeit nicht mehr vorhanden ist, ist nicht möglich. Soll ein solches Spundfaß erneut eingesetzt werden, insbes. mit einer anderen flüssigen Substanz gefüllt werden, so muß die Restmenge aufwendig entfernt und entsorgt werden. Auch die Reinigung des Faßinnenraumes bereitet Schwierigkeiten, wenn sich im Faßinnenraum noch eine störend große Restmenge befindet.

Der Erfindung liegt die Aufgabe zugrunde, ein Verfahren der eingangs beschriebenen Art anzugeben, mit dem ein Spundfaß auf einfache Weise hergestellt werden kann, bei dem in der Entleerungsinversionsstellung eine Vollentleerung ohne störende Restmenge möglich ist.

Zur Lösung dieser Aufgabe lehrt die Erfindung, daß das Spundloch in einen in der Entleerungsinversionsstellung tiefsten Bereich der Faßdecke angeordnet wird, daß der Spundlochkragen in Form eines vorgeformten Bauteils in die Blasform eingelegt wird, daß das Bauteil bei der Blasformgebung mit der Faßdecke verschweißt wird und daß das Spundloch erst nach der Entformung des Spundfasses umgebungswulstfrei durch Bohren gebildet wird. Das vorgeformte Bauteil besteht regelmäßig aus einem thermoplastischen Kunststoff, der mit dein Kunststoff, aus dem der Faßmantel, der Faßboden und die Faßdecke aufgebaut sind, leicht verschweißbar ist. Vorzugsweise wird das Verfahren so geführt, daß ein mit einem Schweißflansch versehener Spundlochkragen über diesen Schweißflansch mit der Faßdecke verschweißt wird. Nach bevorzugter Ausführungsform der Erfindung wird ein Spundloch, dessen Durchmesser mit dem Innendurchmesser des Spundlochkragens übereinstimmt, durch Bohren gebildet. Es stört aber auch nicht, wenn der Innendurchmesser des Spundlochkragens ein wenig größer ist oder ein wenig kleiner ist als der Bohrlochdurchmesser. Ein Verfahren zur Herstellung eines Spundfasses, bei dem das Spundloch in einem in der Entleerungsinversionsstellung tiefsten Bereich der Faßdecke angeordnet wird, ist grundsätzlich bekannt (US-A-4 767 021). - Die Erfindung geht von der Erkenntnis aus, daß im Bereich zwischen Faßdecke und Spundlochkragen zum Faßinnenraum hin aus rheologischen Gründen ein das Spundloch umgebender, mehr oder weniger ausgeprägter Wulst entsteht, wenn, wie eingangs beschrieben, der Spundlochkragen mit Hilfe einer Ausstülpung gebildet wird, oder wenn der Spundlochkragen aus dem thermoplastifizierten Schlauch geformt wird, aus dem das Faß geblasen wird, Dieser mehr oder weniger ausgeprägte Wulst wurde bisher nicht erkannt, wenig beachtet oder als nicht störend in Kauf genommen. Der Wulst stört tatsächlich wenig, wenn das Spundloch an den Faßmantel angeschlossen und das Spundfaß zur Entleerung in eine Entleerungskippstellung gebracht wird. Die moderne Praxis verlangt jedoch die Vollentleerung über die Entleerungsinversionsstellung. Dann bildet der umlaufende Wulst einen Wall, hinter dem sich je nach der Wulstdicke eine sehr beachtliche, störend große Restmenge der zu entleerenden Flüssigkeit staut und sammelt. Eine Vollentleerung ist in einem solchen Falle nicht möglich. Erfindungsgemäß wird ein solcher umlaufender Wulst vermieden, weil das Spundloch durch Bohren gebildet wird. Die Bezeichnung Bohren soll zum Ausdruck bringen, daß das Loch ausgeschnitten wird. Dabei kann mit einem üblichen Bohrer, einem entsprechend geführten mechanischen Messer, einem als Messer eingesetzten Laserstrahl oder dergleichen gearbeitet werden.

Im einzelnen bestehen Rahmen der Erfindung mehrere Möglichkeiten der weiteren Ausbildung und Gestaltung des erfindungsgemäßen Verfahrens. So ist eine Ausführungsform dadurch gekennzeichnet, daß der in Entleerungsinversionsstellung tiefste Bereich der Faßdecke im Zentrum der Faßdecke angeordnet wird. Eine andere Ausführungsform ist dadurch gekennzeichnet, daß der in Entleerungsinversionsstellung tiefste Bereich der Faßdecke als umlaufende flache Rinne am Rand der Faßdecke ausgebildet wird. Es besteht aber auch die Möglichkeit, das Verfahren so zu führen, daß die Faßdecke als schiefe Ebene ausgebildet wird und das Bohrloch in dem in Entleerungsinversionsstellung tiefsten Bereich der schiefen Ebene angeordnet wird.

Durch Einfachheit in verfahrenstechnischer Hinsicht ausgezeichnet ist eine Ausführungsform des erfindungsgemäßen Verfahrens, bei der das vorgeformte Bauteil so in die Blasform eingelegt wird, daß es das bei der Blasformgebung entstehende Blasloch umgibt, welches kleiner gestaltet wird als es dem Innendurchmesser des Spundlochkragens entspricht, und daß der Bereich der Faßdecke zwischen Blasloch und Spundlochkragen erst nach der Entformung des Spundfasses durch Bohren entfernt wird. Auch auf diese Weise wird das Spundloch umgebungswulstfrei gebildet.

Wie bereits erwähnt ist ein Spundfaß im allgemeinen mit zwei Spundlöchern versehen. Das zweite Spundloch ist bei dem nach dem erfindungsgemäßen Verfahren hergestellten Spundfaß außerhalb des in Entleerungsinversionsstellung tiefsten Bereiches der Faßdecke angeordnet. Erfindungsgemäß wird zweckmäßigerweise auch das zweite Spundloch als Bohrloch ausgebildet und der Spundlochkragen mit einem Schweißflansch angeschweißt. Bei der Herstellung eines Spundfasses mit zwei Spundlöchern empfiehlt es sich, daß die vorgeformten Bauteile für beide Spundlöcher in die Blasform eingelegt werden. Im Rahmen der Erfindung liegt auch ein Verfahren, dem besondere Bedeutung zukommt, und das dadurch gekennzeichnet ist, daß das Spundloch in einem in der Entleerungsinversionsstellung tiefsten Bereich der Faßdecke angeordnet wird, daß das Spundloch erst nach der Entformung des Spundfasses umgebungswulstfrei durch Bohren gebildet wird, daß der Spundlochkragen mit einer Verlängerung, die in den Faßinnenraum hineinragt und deren Außendurchmesser in den Bohrlochdurchmesser eingepaßt ist, in die Faßdecke eingeschweißt wird und daß in der Verlängerung Vollentleerungsbohrungen angeordnet werden.

Im folgenden wird die Erfindung anhand von jeweils lediglich ein Ausführungsbeispiel darstellenden Zeichnungen ausführlicher erläutert. Es zeigen in schematischer Darstellung
- Fig. 1: einen Axialschnitt durch ein erfindungsgemäß hergestelltes Spundfaß,
- Fig. 2: in gegenüber der Fig. 1 wesentlich vergrößertem Maßstab den Ausschnitt A-A aus dem Gegenstand nach Fig. 1,
- Fig. 3: im linken Teil den nochmals vergrößerten Ausschnitt B-B aus dem Gegenstand nach Fig. 2 und im rechten Teil eine entsprechende Darstellung einer bekannten Ausführungsform,
- Fig. 4: entsprechend der Fig. 1 eine andere Ausführungsform eines erfindungsgemäß hergestellten Spundfasses.
- Fig. 5: entsprechend der Fig. 1 eine weitere Ausführungsform,
- Fig. 6: die Seitenansicht einer nochmals anderen Ausführungsform, teilweise im Vertikalschnitt,
- Fig. 7: den vergrößerten Ausschnitt A aus dem Gegenstand nach Fig. 6 und
- Fig. 8: eine Draufsicht auf den Gegenstand nach Fig. 7.

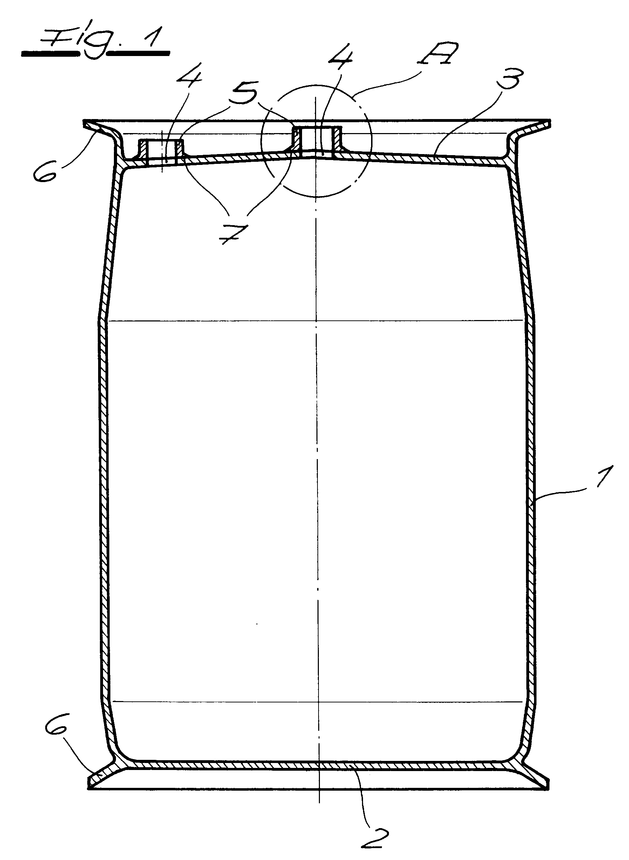

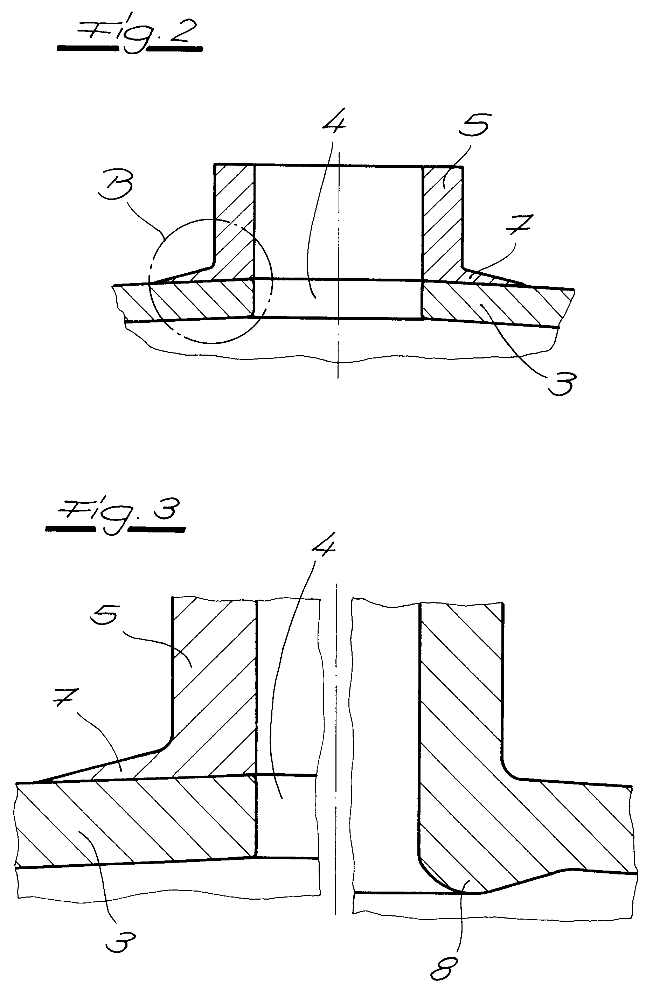

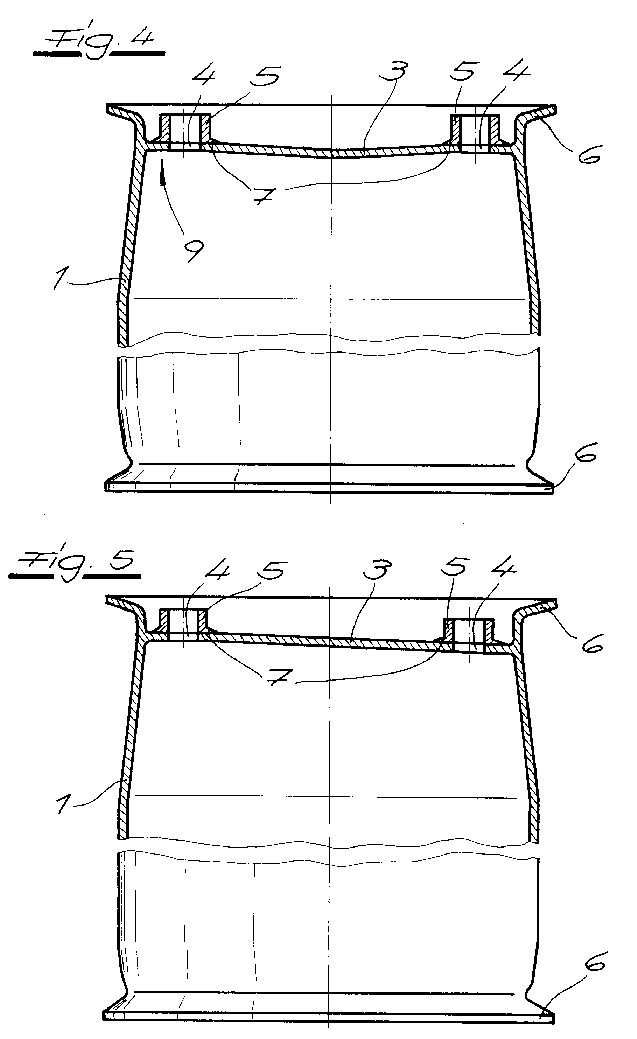

Das in den Figuren 1 bis 5 dargestellte Spundfaß besitzt einen Faßmantel 1, einen Faßboden 2 und eine Faßdecke 3. Das Spundfaß wurde einstückig im Wege der Blasformgebung aus thermoplastischem Kunststoff geformt. Die Faßdecke 3 besitzt im Ausführungsbeispiel zwei Spundlöcher 4 mit Spundlochkragen 5. Im Bereich des Überganges zwischen Faßmantel 1 und Faßdecke 3 ist ein L-Ring 6 für die Manipulationszwecke angeordnet. Insbesondere aus einer vergleichenden Betrachung der Fig. 1 und 2 entnimmt man, daß das Spundloch 4 als Bohrloch ausgeführt ist, welches in einem in der Entleerungsinversionsstellung tiefsten Bereich der Faßdecke 3 angeordnet ist. In der Entleerungsinversionsstellung würden die in den Fig. 1 sowie 4 und 5 dargestellten Fässer mit vertikaler Achse auf dem Kopf stehen. Der Spundlochkragen 5 ist als ein vorgeformtes Bauteil mit Schweißflansch 7 ausgebildet. Das vorgeformte Bauteil ist von außen mit dem Schweißflansch 7 an die Faßdecke 3 angeschweißt. Es mag ebenfalls aus Kunststoff bestehen und weist einen Innendurchmesser auf, der mit dem Bohrlochdurchmesser möglichst genau übereinstimmt. - Durch das Bohrloch und die beschriebene Gestaltung wird die Ausbildung eines Wulstes vermieden, der entsteht, wenn der Spundlochkragen 5 bei der Blasformgebung aus dem thermoplastifizierten Schlauch gebildet wird, der in der Blasform zu dem Spundfaß 1, 2, 3 aufgeblasen wird, oder aber wenn der Spundlochkragen 5 als eine Ausstülpung bei der Blasformgebung hergestellt wird. Insoweit wird auf die Fig. 3 verwiesen. In der Fig. 3 links erkennt man als Vergrößerung aus dem Gegenstand der Fig. 2 die erfindungsgemäße Ausführungsform, in der Fig. 3 rechts den bei den bekannten Ausführungsformen beschriebenen Wulst 8. Wie bereits erläutert, bildet dieser Wulst 8 in der Entleerungsinversionsstellung gleichsam einen Staudamm, der eine störende Menge an der zu entleerenden flüssigen Substanz festhält.

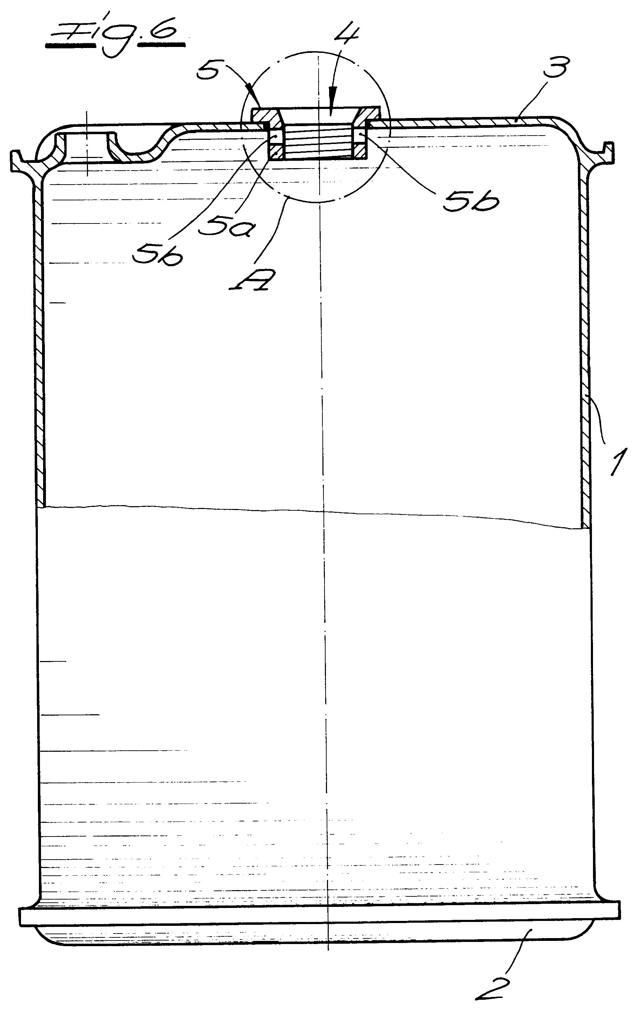

Bei der Ausführungsform nach Fig. 1 befindet sich der in Entleerungsinversionsstellung tiefste Bereich der Faßdecke 3 im Zentrum der Faßdecke 3. Bei der Ausführungsform nach Fig. 4 ist die Ausbildung so getroffen, daß der in Entleerungsinversionsstellung tiefste Bereich der Faßdecke 3 als umlaufende Rinne 9 am Rand der Faßdecke 3 ausgeführt ist. In der Fig. 5 erkennt man, daß die Faßdecke 3 als schiefe Ebene ausgeführt ist und daß das linke Spundloch 4 in dem in Entleerungsinversionsstellung tiefsten Bereich der schiefen Ebene angeordnet ist. Im Ausführungsbeispiel besitzt das Spundfaß 1, 2, 3 stets auch ein zweites Spundloch 4. Auch das zweite Spundloch 4 ist als Bohrloch ausgeführt und der Spundlochkragen 5 ist als vorgeformtes Bauteil mit einem Schweißflansch 7 angeschweißt.

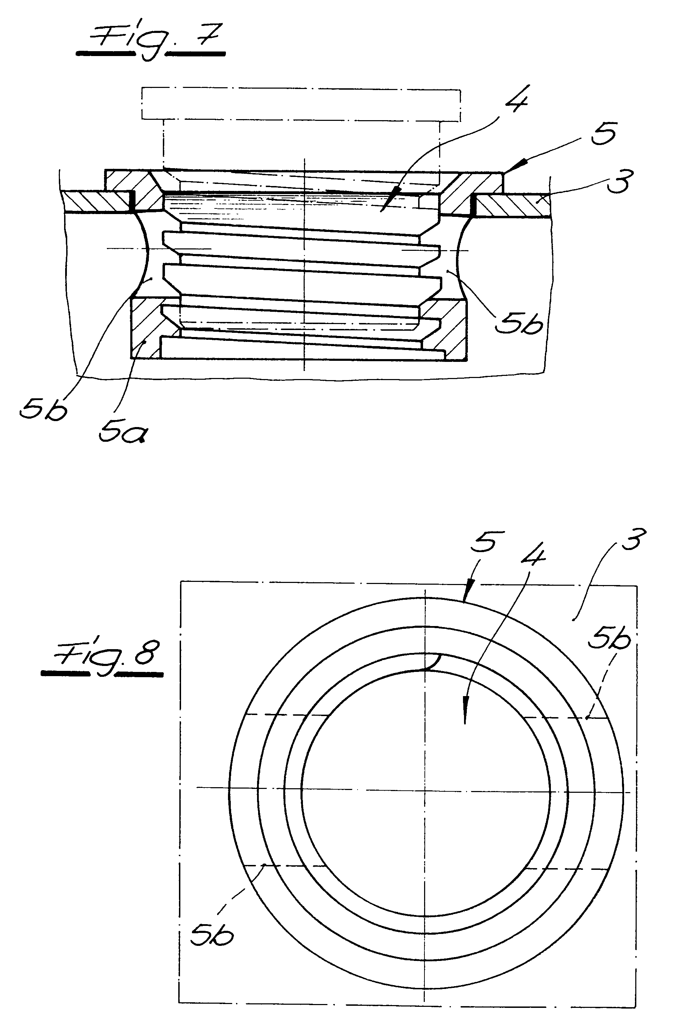

Die Ausführungsform nach den Fig. 6 bis 8 unterscheidet sich von der Ausführungsform nach den Fig. 1 bis 5 dadurch, daß der Spundlochkragen 5, der ein vorgeformtes Bauteil darstellt, einen nach außen vorspringenden Schweißflansch nicht aufweist. Die Anordnung ist vielmehr so getroffen, daß der Spundlochkragen 5 eine Verlängerung 5a besitzt, die in den Faßinnenraum hineinragt und deren Außendurchmesser in den Bohrlochdurchmesser und damit in den Durchmesser des Spundloches 4 eingepaßt ist. Der Spundlochkragen 5 ist mit der Verlängerung 5a in die Faßdecke 3 eingeschweißt. In der Verlängerung 5a sind Vollentleerungsbohrungen 5b angeordnet. Die Faßdecke 3 weist, bezogen auf den Entleervorgang des gekippten oder um 180 °C gedrehten Fasses, einen tiefsten Punkt und im tiefsten das Spundloch 4 mit dem Spundlochkragen 5 auf. Vollentleerungsbohrungen bedeutet, daß gleichsam faßinnenraumseitig in dem verlängerten Spundlochkragen 5a diese Bohrungen 5b angeordnet sind, welche die Innenoberfläche der Faßdecke 3 tangieren. Dazu wird insbesondere auf die Fig. 7 verwiesen, die erkennen läßt, daß eine sehr vollständige Entleerung möglich ist.

## Patentansprüche

1. Verfahren zur Herstellung eines Spundfasses im Wege der Blasformgebung, wobei Faßmantel (1), Faßboden (2) und Faßdecke (3) einstückig aus thermoplastischem Kunststoff geformt werden, wobei in der Faßdecke (3) zumindest ein Spundloch (4) mit Spundlochkragen (5) angebracht und wobei im Bereich des Überganges zwischen Faßmantel (1) und Faßdecke (3) für Manipulationszwecke ein L-Ring (6) angeordnet wird, **dadurch gekennzeichnet**, daß das Spundloch (4) in einem in der Entleerungsinversionsstellung tiefsten Bereich der Faßdecke (3) angeordnet wird, daß der Spundlochkragen (5) in Form eines vorgeformten Bauteils in die Blasform eingelegt wird, daß das Bauteil bei der Blasformgebung mit der Faßdecke (3) verschweißt wird und daß das Spundloch erst nach der Entformung des Spundfasses umgebungswulstfrei durch Bohren gebildet wird.

2. Verfahren nach Anspruch 1, dadurch gekennzeichnet, daß ein mit einem Schweißflansch (7) versehener Spundlochkragen (5) über diesen Schweißflansch (7) mit der Faßdecke (3) verschweißt wird.

3. Verfahren nach einem der Ansprüche 1 oder 2, dadurch gekennzeichnet, daß ein Spundloch (4), dessen Durchmesser mit dem Innendurchmesser des Spundlochkragens (5) übereinstimmt, durch Bohren gebildet wird.

4. Verfahren nach einem der Ansprüche 1 bis 3, dadurch gekennzeichnet, daß der in der Entleerungsinversionsstellung tiefste Bereich der Faßdecke (3) im Zentrum der Faßdecke (3) angeordnet wird.

5. Verfahren nach einem der Ansprüche 1 bis 3, dadurch gekennzeichnet, daß der in der Entleerungsinversionsstellung tiefste Bereich der Faßdecke (3) als umlaufende, flache Rinne (9) am Rand der Faßdecke (3) ausgebildet wird.

6. Verfahren nach einem der Ansprüche 1 bis 5, dadurch gekennzeichnet, daß das vorgeformte Bauteil so in die Blasform eingelegt wird, daß es das bei der Blasformgebung entstehende Blasloch umgibt, welches kleiner gestaltet wird, als es dem Innendurchmesser des Spundlochkragens (5) entspricht, und daß der Bereich der Faßdecke (3) zwischen Blasloch und Spundlochkragen (5) erst nach der Entformung des Spundfasses durch Bohren entfernt wird.

7. Verfahren nach einem der Ansprüche 1 bis 6, in der Ausführungsform für die Herstellung eines Spundfasses mit zwei Spundlöchern (4), dadurch gekennzeichnet, daß die vorgeformten Bauteile für beide Spundlöcher (4) in die Blasform eingelegt werden.

8. Verfahren nach den Oberbegriff des Anspruches 1, dadurch gekennzeichnet, daß das Spundloch (4) in einem in der Entleerungsinversionsstellung tiefsten Bereich der Faßdecke (3) angeordnet wird, daß das Spundloch (4) erst nach der Entformung des Spundfasses umgebungswulstfrei durch Bohren gebildet wird, daß der Spundlochkragen (5) in Form eines vorgeformten Bauteils mit einer Verlängerung (5a), die in den Faßinnenraum hineinragt und deren Außendurchmesser in den Bohrlochdurchmesser eingepaßt ist, in die Faßdecke (3) eingeschweißt wird und daß in der Verlängerung (5a) Vollentleerungsbohrungen (5b) angeordnet werden.

## Claims

1. A method for the manufacture of a bung barrel by a blow moulding route, wherein the barrel sidewall (1), barrel bottom (2) and barrel top (3) are moulded in one piece from synthetic thermoplastic material, wherein at least one bung-hole (4) with a bung hole collar (5) is provided in the barrel top (3) and wherein an L-ring (6) is disposed in the transition region between the barrel sidewall (1) and the barrel top (3) for manipulation purposes, characterised in that the bung-hole (4) is disposed in a region of the barrel top (3) which is the lowest region in the inverted, emptying position, that the bung-hole collar (5) is inserted in the blowing mould in the form of a preformed component, that the component is welded to the barrel top (3) during blow moulding and that the bung-hole is formed without a surrounding bead by drilling, after the bung barrel has been removed from the mould.

2. A method according to claim 1, characterised in that a bunghole collar (5) provided with a welding flange (7) is welded to the barrel top (3) via the said welding flange (7).

3. A method according to one of claims 1 or 2, characterised in that a bung-hole (4), the diameter of which corresponds to the inside diameter of the bung-hole collar (5), is formed by drilling.

4. A method according to any one of claims 1 to 3, characterized in that the region of the barrel top (3) which is the lowest region in the inverted emptying position is disposed in the centre of the barrel top (3).

5. A method according to any one of claims 1 to 3, characterised in that the region of the barrel top (3) which is the lowest region in the inverted, emptying position is constructed as a surrounding shallow channel (9) at the edge of the barrel top (3).

6. A method according to any one of claims 1 to 5, characterized in that the pre-formed component is inserted in the blowing mould so that it surrounds the blown hole produced on blow moulding, which blown hole is fashioned so that it is smaller than the inside diameter of the bung-hole collar (5), and that the region of the barrel top (3) between the blown hole and the bung-hole collar (5) is removed by drilling, after the bung barrel has been removed from the mould.

7. A method according to any one of claims 1 to 6 in a form of implementation for the manufacture of a bung barrel with two bung-holes (4), characterised in that the pre-formed components for both bung-holes (4) are inserted in the blowing mould.

8. A method according to the generic term of claim 1, characterized in that the bung-hole (4) is disposed in a region of the barrel top (3) which is the lowest region in the inverted, emptying position, that the bung-hole (4) is formed without a surrounding bead by drilling, after the bung barrel has ben removed from the mould, that the bung-hole collar (5) in the form of a pre-formed component is welded to the barrel top (3) by means of an extension (5a) which projects into the internal space of the barrel and the outside diameter of which extension is matched to the bung-hole diameter, and that holes for complete emptying (5b) are disposed in the extension (5a).

## Revendications

1. Procédé pour fabriquer un réservoir à bonde lors de sa mise en forme par soufflage, selon lequel on forme la paroi latérale (1), le fond (2) et le couvercle (3) du réservoir d'un seul tenant en une matière thermoplastique, et on aménage, dans le couvercle (3) du réservoir, un trou de bonde (4) comportant un collet (5) et on dispose, pour en permettre la manipulation, un anneau en forme de L (6) dans la zone de la jonction entre la paroi latérale (1) et le couvercle (3) du réservoir, caractérisé en ce qu'on dispose le trou de bonde (4) dans la partie du couvercle (3) du réservoir, qui est la plus basse dans la position retournée de vidage, qu'on insère le collet (5) du trou de bonde sous la forme d'un composant préformé, dans le moule de soufflage, qu'on soude le composant au couvercle (3) du réservoir lors de la mise en forme par soufflage et qu'on forme par perçage le trou de bonde uniquement après le démoulage du réservoir à bonde, sans formation d'un rebord enveloppant.

2. Procédé selon la revendication 1, caractérisé en ce qu'on soude un collet (5) du trou de bonde, pourvu d'une bride de soudage (7), au couvercle (3) du réservoir, par l'intermédiaire de cette bride de soudage (7).

3. Procédé selon l'une des revendications 1 ou 2, caractérisé en ce qu'on forme par perçage un trou de bonde (4), dont le diamètre est égal au diamètre intérieur du collet (5) du trou de bonde.

4. Procédé selon l'une des revendications 1 à 3, caractérisé en ce que la partie du couvercle (3) du réservoir, qui est la plus basse dans la position retournée de vidage, est disposée au centre du couvercle (3) du réservoir.

5. Procédé selon l'une des revendications 1 à 3, caractérisé en ce que la partie, qui est la plus basse dans la position retournée de vidage, du couvercle (3) du réservoir est réalisée sous la forme d'une rainure circonférentielle peu profonde (9) ménagée sur le bord du couvercle (3) du réservoir.

6. Procédé selon l'une des revendications 1 à 5, caractérisé en ce qu'on insère le composant préformé dans le moule de soufflage de telle sorte qu'il entoure le trou de soufflage, qui apparaît lors de la mise en forme par soufflage et qui est agencé avec une taille inférieure à ce qui correspond au diamètre intérieur du collet (5) du trou de bonde, et qu'on élimine par perçage la partie du couvercle (3) du réservoir entre le trou de soufflage et le collet (5) du trou de bonde uniquement après démoulage du réservoir à bonde.

7. Procédé selon l'une des revendications 1 à 6, dans la forme de réalisation utilisée pour fabriquer un réservoir à bonde, comportant deux trous de bonde (4), caractérisé en ce qu'on insère dans le moule de soufflage les composants préformés pour les deux trous de bonde (4).

8. Procédé selon le préambule de la revendication 1, caractérisé en ce qu'on dispose le trou de bonde (4) dans la partie du couvercle (3) du réservoir, qui est la plus basse dans la position retournée de vidage, qu'on forme par perçage le trou de bonde (4) uniquement après démoulage du réservoir à bonde, sans formation d'un rebord enveloppant, qu'on fixe par soudage, dans le couvercle (3) du réservoir, le collet (5) du trou de bonde sous la forme d'un composant préformé comportant un prolongement (5a), qui pénètre dans l'espace intérieur du réservoir et dont le diamètre extérieur est adapté au diamètre du trou de bonde, et qu'on aménage des perçages de vidage complet (5b) dans le prolongement (5a).
